# EUROPEAN PATENT APPLICATION

(11) **EP 4 729 992 A1**
(43) Date of publication of application: **22.04.2026**
(21) Application number: 25209131.9
(22) Date of filing: 16.10.2025
(51) Int. Cl.: G01V 5/222, G01V 5/22, G01N 23/04, G01N 23/203

(54) **A SYSTEM AND METHOD FOR CARGO SCANNING USING X-RAY BACKSCATTER AND TRANSMISSION IMAGING TECHNIQUES**

(30) Priority: 18.10.2024 MY PI2024006046
(71) Applicant: Billion Prima SDN. BHD, 81000 Kulai Johor (MY); Sensenet SDN BHD, 40400 Shah Alam Selangor (MY)
(72) Inventor: LEONG, Goh Chu, 81000 Kulai (MY); JIUNN, Lee Yuh, 81000 Kulai (MY); KWAN, Tan Heng, 81000 Kulai (MY)
(74) Representative: Openshaw & Co.

(57) **Abstract**

The present invention relates to a system **(100)** and method for cargo scanning using X-ray backscatter and transmission imaging techniques. The system **(100)** is integrated with both X-ray backscatter and transmission imaging techniques to scan a cargo unit in drive-through mode. The system **(100)** is able to generate multiple material discrimination images of the cargo unit from multiple perspective angles using both X-ray backscatter and transmission imaging techniques. The system **(100)** comprises two transmission source modules **(110),** two transmission detector modules **(120),** three backscatter sources **(130),** three backscatter detector modules **(140),** a controller **(150)** and processing modules **(160).**

## Description

### FIELD OF INVENTION

The present invention relates to a system and method for cargo scanning adopting X-ray backscatter and transmission imaging techniques.

### BACKGROUND OF THE INVENTION

Adopting both X-ray backscatter and transmission imaging techniques in a cargo scanning system offers significant advantages over using either one alone. Together, they provide a more comprehensive and detailed analysis of cargo, increasing detection accuracy and minimising the likelihood of contraband or threats going unnoticed. The combination ensures the cargo scanning system effectively detects both high-density and low-density materials, reducing the chances of anything being overlooked.

In one example, a Chinese Patent Publication No. CN107655906A discloses a vehicle security inspection system, vehicle security inspection method and controller. The vehicle security inspection system includes a backscatter detector for performing backscatter detection on a vehicle to be detected, a transmission detector for performing transmission detection on the vehicle to be detected, and a controller, wherein the controller determines that the cab of the vehicle to be detected passes through a transmission detection area according to backscatter detection data, and then turns on the X-ray generator of the transmission detector. The vehicle security inspection system can determine the position of the vehicle cab relative to the transmission detection area according to the backscatter detection data on the basis of the backscatter detection of the vehicle and turns on the ray generator of the transmission detector after the cab leaves the transmission detection area in order to carry out the backscatter detection on the entire vehicle and avoid transmission detection on the cab, and the backscatter detection of the whole vehicle improves the security inspection effect while ensuring the safety of personnel in the cab.

In another example, a PCT Publication No. WO2011008718A1 discloses a four-sided scanning system for vehicles that uses a combination of backscatter and transmission-based X-ray imaging to achieve material discrimination. The system can be designed as a mobile, drive-through system that can be folded and stowed in a truck and if required, the system can be conveniently deployed at any place.

In yet another example, a PCT Publication No. WO2022010738A1 discloses systems and methods for inspection portals. The inspection portal includes a first x-ray source configured to emit a first beam, a first backscatter detector configured to detect backscatter from the first beam, a second x-ray source configured to emit a second beam, a second backscatter detector configured to detect backscatter from the second beam, and at least one first collimator and at least one second collimator, each oriented to detect backscatter from the associated beam and to block scatter from the other beam. The first and second backscatter detectors are configured to weight signals acquired using each of their detector element based on the first and second beams. The first backscatter detector is configured to use signal processing techniques to mitigate crosstalk due to scatter from the second beam, and the second backscatter detector is configured to use the signal processing techniques to mitigate crosstalk due to scatter from the first beam.

However, adopting both X-ray backscatter and transmission imaging techniques in a single cargo scanning system presents several technical challenges. One of the key challenges is mitigating crosstalk between the two imaging techniques. This occurs when the X-rays emitted by the transmission source are inadvertently detected by the backscatter detector, leading to distortion and inaccuracy in material discrimination results.

To address the crosstalk between the two imaging techniques, the cargo scanning systems are typically configured to alternately activate between the backscatter source or detector and the transmission source or detector. While the backscatter source and detector are activated, the transmission source or detector is inactive, and vice versa. This requires a synchronisation configuration between the backscatter and transmission imaging modules of the cargo scanning systems. However, this alternating activation may affect the scanning continuity of a cargo as certain portions of the cargo may not be scanned and captured by the X-ray backscatter or transmission imaging technique during their inactive phases.

The scanning continuity may also be compromised in cargo scanning systems that employ X-ray backscatter imaging technique for one designated part of the cargo while using X-ray transmission imaging technique for another designated part. For scanning a cargo container being driven by a cargo vehicle, the X-ray backscatter imaging technique is specifically used for inspecting the cab of the cargo vehicle, while the X-ray transmission imaging technique is employed for the cargo section. Although this selective approach reduces crosstalk and minimises radiation exposure to personnel within the cab, it affects the scanning continuity of the entire cargo vehicle carrying the cargo as both imaging techniques would only scan and capture different parts of the cargo vehicle carrying the cargo, potentially leaving gaps in the overall scanning. Neither X-ray backscatter imaging nor X-ray transmission imaging scans the entire cargo vehicle carrying the cargo.

As cargo inspection requires a comprehensive coverage of the entire cargo, the cargo scanning system should be able to scan and capture different views. This may suggest increasing the number of backscatter and transmission sources and detectors. However, having multiple backscatter and transmission sources and detectors would significantly increase power consumption and radiation exposure. Moreover, the increased number of sources and detectors would demand more processing resources that could limit the ability to provide real-time material discrimination results.

Therefore, there is a need to address the limitations and drawbacks mentioned above to adopt both X-ray backscatter and transmission imaging in a cargo scanning system.

### SUMMARY OF INVENTION

The present invention provides a system (**100**) for cargo scanning using X-ray backscatter and transmission imaging techniques. The system (**100**) comprises at least two transmission source modules (**110**), wherein each transmission source module (**110**) is configured to generate and emit a transmission radiation beam; at least two transmission detector modules (**120**) configured to detect and quantify the transmission radiation beams that penetrate through a cargo unit, wherein each transmission detector module (**120**) is arranged and designated to detect and quantify the transmission radiation beam from a particular transmission source module (**110**); at least three backscatter source modules (**130**), wherein each backscatter source module (**130**) is configured to generate and emit an incident radiation beam toward a target area of the cargo unit; at least three backscatter detector modules (**140**) are configured to detect and quantify the incident radiation beams that scatter from their target area of the cargo unit; a controller (**150**) connected to the at least two transmission source and detector modules (**110**, **120**) and the at least three backscatter source and detector modules (**130**, **140**), wherein the controller is configured to control the transmission and backscatter source modules (**110**, **130**) and the transmission and backscatter detector modules (**120**, **140**); and at least two processing modules (**160**) connected to the controller (**150**). The at least two processing modules (**160**) are configured to generate at least five material discrimination images by performing multiple image processing tasks on each backscatter and transmission image dataset produced by the at least two transmission detector modules (**120**) and the at least three backscatter detector modules (**140**), wherein the multiple image processing tasks include image combining, image calibration, noise filtration, energy merging, grayscale value generation, material discrimination value generation, and image composition.

Preferably, at least one of the at least two transmission source modules (**110**) is a cyclic particle accelerator.

Preferably, each processing module (**160**) includes at least one computational thread configured to execute at least one of the multiple image processing tasks on the backscatter or transmission image datasets concurrently.

Preferably, a first processing module (**160a**) is configured to generate at least two material discrimination images of the cargo unit from the transmission image datasets produced by the transmission detector modules (**120**), and a second processing module (**160b**) is configured to generate at least three material discrimination images of the cargo unit from the backscatter image datasets produced by the backscatter detector modules (**140**).

Preferably, a first transmission source module (**110a**) is installed at a front section of a first side structure (**11**) of a gantry and a first transmission detector module (**120a**) is installed at a front section of a second side structure (**12**) of the gantry (**10**).

Preferably, a second transmission source module **(110b)** is installed at a front section of an overhead structure (**13**) of a gantry (**10**) and a second transmission detector module (**120b**) is installed at a bottom compartment (**15**) of the gantry (**10**).

Preferably, a first backscatter source and detector modules **(130a, 140a)** are installed at a back section of a first side structure (**11**) of a gantry (**10**).

Preferably, a second backscatter source and detector modules (**130b**, **140b**) are installed at a back section of a second side structure (**12**) of a gantry (**10**).

Preferably, a third backscatter source and detector modules (**130c, 140c**) are installed at a back section of an overhead structure (**13**) of a gantry (**10**).

The present invention also provides a method for cargo scanning using X-ray backscatter and transmission imaging techniques. The method is characterised by the steps of triggering at least two transmission source modules (**110**) and at least three backscatter source modules (**110**) to emit the incident and transmission radiation beams, and triggering at least two transmission detector modules (**120**) and at least three backscatter detector modules (**140**) to detect and quantify radiation beams; detecting and quantifying the radiation beams scattered from a cargo unit and penetrated through the cargo unit; relaying a transmission or backscatter image dataset from each transmission and backscatter detector module (**120**, **140**) to one of at least two processing modules (**160**); and performing multiple image processing tasks on each backscatter and transmission image dataset to generate at least five material discrimination images of the cargo unit from a respective vantage point of each transmission and backscatter detector module (**120, 140**). The multiple image processing tasks include image calibration, energy merging, noise filtration, grayscale value generation and material discrimination value generation, wherein at least one of the multiple image processing tasks are executed concurrently by at least one computational thread.

Preferably, the at least five material discrimination images include a side transmission imaging view, a top transmission imaging view, a top backscatter imaging view, and both side backscatter imaging views of the cargo unit.

### BRIEF DESCRIPTION OF THE DRAWINGS

The accompanying drawings, which are incorporated in and constitute a part of the specification, illustrate embodiments of the invention and, together with the description, serve to explain the principles of the invention.
**FIG. 1** shows a block diagram of a system (**100**) for cargo scanning using X-ray backscatter and transmission imaging techniques according to an embodiment of the present invention.
**FIGS. 2****(a-c)** show a gantry (**10**) adapted for the system (**100**) of **FIG. 1****.**

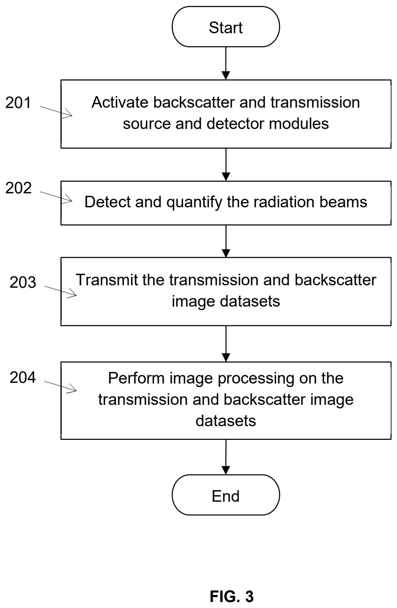

**FIG. 3** shows a flowchart of a method for scanning a cargo unit according to an embodiment of the present invention.

### DESCRIPTION OF THE PREFERRED EMBODIMENT

A preferred embodiment of the present invention will be described herein below with reference to the accompanying drawings. In the following description, well-known functions or constructions are not described in detail since they would obscure the description with unnecessary detail.

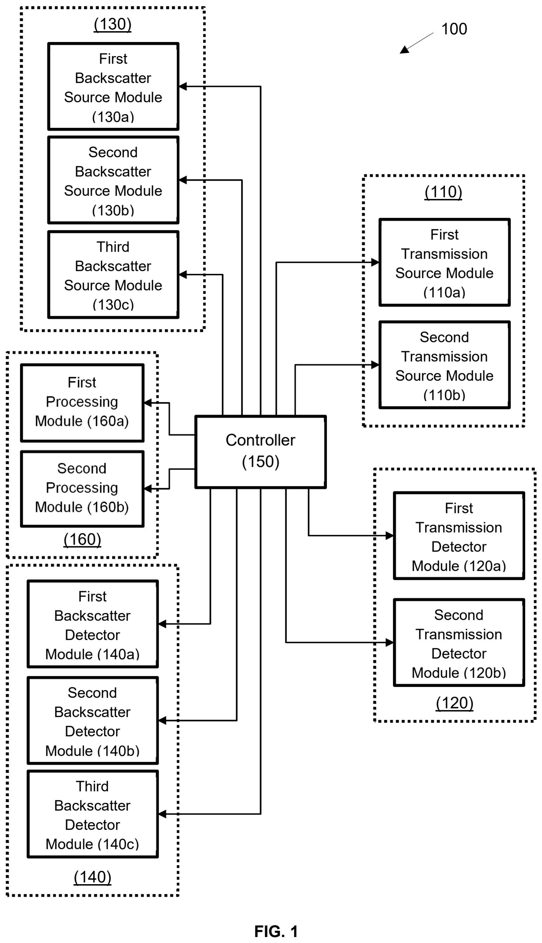

Referring now to **FIG. 1**, there is shown a block diagram of a system (**100**) for cargo scanning using X-ray backscatter and transmission imaging techniques according to an embodiment of the present invention. The system (**100**) is integrated with both X-ray backscatter and transmission imaging techniques to scan a cargo unit. The term 'cargo unit' used herein may refer to either a cargo vehicle, a cargo container, or both a cargo vehicle and the cargo container it carries. The system (**100**) is able to generate multiple material discrimination images of the cargo unit from multiple perspective angles using both X-ray backscatter and transmission imaging techniques. Preferably, the system (**100**) generates at least two material discrimination images of the cargo unit from different perspective angles based on the X-ray transmission imaging technique, and at least three material discrimination images of the cargo unit from different perspective angles based on the X-ray backscatter imaging technique.

The system (**100**) comprises two transmission source modules (**110**), two transmission detector modules (**120**), three backscatter source modules (**130)**, three backscatter detector modules (**140**), a controller (**150**) and two processing modules (**160**). The transmission source modules (**110**), the transmission detector modules (**120**), the backscatter source modules (**130**), the backscatter detector modules (**140**) and the processing module (**160**) are electrically connected to the controller (**150**). Although it has been described that the system (**100**) comprises the transmission source modules (**110**), transmission detector modules (**120**), backscatter source modules (**130**), backscatter detector modules (**140**), controller (**150**) and processing modules (**160**), it may be apparent to a person skilled in the art that the system (**100**) may further include any other necessary components or equipment for capturing and processing the inspection data such as a radioactive detector, a data acquisition module, a weight sensor, a surveillance camera and a power supply module. Moreover, it may also be apparent to a person skilled in the art that the number of transmission source and detector modules (**110**, **120**), and backscatter source and detector modules (**130**, **140**), used in the system (**100**) may be increased to achieve more comprehensive X-ray backscatter and transmission imaging coverage of the cargo unit from different perspective angles.

Each transmission source module (**110**) is configured to generate and emit a transmission radiation beam at at least one different energy level, wherein the transmission radiation beam refers to an X-ray radiation beam emitted from each transmission source module (**110**). Each transmission source module (**110**) can either be a cyclic particle accelerator or a linear particle accelerator. Preferably, at least one of the transmission source modules (**110**) is a cyclic particle accelerator that accelerates electrons in a circular orbit so as to generate and emit the X-ray radiation beam at different energy levels. If the transmission source module (**110**) is a cyclic particle accelerator, the transmission source module (**110**) includes a radiator that allows electrons injected from an electron gun to move in a vacuum-accelerating chamber along a circular trajectory, wherein a magnetic guiding field enables the circular trajectory of the electrons and the electrons acquire energy from an eddy electric field induced by a pulse magnetic flux. The transmission radiation beam is generated and emitted from the radiator when the electrons gain sufficient energy. Since the radiator primarily relies on at least one magnetic core and windings to continuously accelerate electrons in multiple cycles along a circular orbit for generating and emitting the transmission radiation beam, this results in relatively lower power consumption and reduced peak power requirements compared to complex X-ray source devices such as linear particle accelerators.

The transmission radiation beam emitted from each transmission source module (**110**) is shaped as a fan beam by a collimator. This ensures that the transmission radiation beam from each transmission source module (**110**) is properly aligned and directed towards its respective transmission detector module (**120**). The collimator is mounted adjacent to an emission point of each transmission source module (**110**), wherein the emission point refers to the specific location or area on the transmission source module (**110**) from which the transmission radiation beam is emitted.

The transmission detector modules (**120**) are configured to detect and quantify the transmission radiation beams that penetrate through the cargo unit. Each transmission detector (**120**) detects and quantifies the penetrated transmission radiation beam, section by section of the cargo unit to produce a transmission line image data for each section. Each transmission detector module (**120**) assembles multiple transmission line image data to generate a transmission image dataset that represents essentially the entire or part of the cargo unit. Thus, each transmission detector module (**120**) outputs the transmission image dataset based on the detected radiation beam at each energy level. Each transmission image dataset includes the transmittance radiation and attenuation characteristic values of the detected radiation beam at one particular energy level. Each transmission detector module (**120**) is arranged and designated to detect and quantify the transmission radiation beam from a particular transmission source module (**110**). In this case, a first transmission detector module (**120a**) is designated to detect and quantify a first transmission radiation beam emitted from the first transmission source module (**110a**), while a second transmission detector module (**120b**) is designated to detect and quantify a second transmission radiation beam emitted from the second transmission source module (**110b**).

Each backscatter source module (**130**) is configured to generate and emit an incident radiation beam toward a target area of the cargo unit, wherein the incident radiation beam refers to an X-ray radiation beam emitted from each backscatter source module (**130**). Each incident radiation beam emitted from the backscatter source module (**130**) has a different energy level as compared to the transmission radiation beam. For instance, the transmission source modules (**110**) emit the transmission radiation beams at two different energy levels of 4 MeV and 7.5 MeV, while the backscatter source modules (**130**) emit the incident radiation beam at 222 keV. This distinction helps to reduce crosstalk between the backscatter and transmission imaging techniques. Each backscatter source module (**130**) includes an X-ray generator for generating the incident radiation beam and a collimator for focusing and shaping the incident radiation beam generated. Each backscatter source module (**130**) may also include a flying spot apparatus that modulates the incident radiation beam generated by the X-ray generator. This allows the incident radiation beam to focus on specific spots in a controlled manner so as to enhance quality and contrast for detection by the backscatter detector modules (**140**).

The backscatter detector modules (**140**) are configured to detect and quantify the scattered radiation beams that result from the incident radiation beams interacting with their target area of the cargo unit. Each backscatter detector (**140**) detects and quantifies the scattered radiation beams, section by section of the cargo unit to produce a backscatter line image data for each section. Each backscatter detector module (**140**) assembles multiple backscatter line image data to generate a backscatter image dataset that represents essentially the entire or part of the cargo unit. Each backscatter image dataset includes the intensity characteristics of the scattered radiation beam. Each backscatter detector module (**140**) is arranged and designated to detect and quantify the scattered radiation beam from a particular backscatter source module (**130**). In this case, a first backscatter detector module (**140a**) is designated and arranged to detect and quantify a first scattered radiation beam resulting from the interaction of a first incident radiation beam emitted by the first backscatter source module (**130a**) with its target area of the cargo unit, a second backscatter detector module (**140b**) is designated and arranged to detect and quantify a second scattered radiation beam resulting from the interaction of a second incident radiation beam emitted by the second backscatter source module (**130b**) with its target area of the cargo unit, while a third backscatter detector module (**140c**) is designated and arranged to detect and quantify a third scattered radiation beam resulting from the interaction of a third incident radiation beam emitted by the third backscatter source module (**130c**) with its target area of the cargo unit.

The controller (**150**) is configured to control the transmission and incident radiation beams emitted from the transmission and backscatter source modules (**110, 130),** wherein the controller (**150**) controls the start and stop of the transmission or incident radiation beam emission from each transmission and backscatter source module (**110, 130**) and regulates the energy levels of the emitted transmission and incident radiation beams. Moreover, the controller (**150**) is also configured to trigger the transmission and backscatter detector modules (**120**, **140**) to detect and quantify the transmission and scattered radiation beams. For the transmission source modules (**110**) emitting transmission radiation beams at multiple energy levels, the controller (**150)** may be configured to synchronise the energy levels of the transmission radiation beams with a suitable sensitivity range of the transmission detector modules (**120**) to detect the transmission radiation beams penetrating through the cargo unit. The controller (**150**) alternately switches between different energy levels during the scanning of the cargo unit. The controller (**150**) is further connected to the processing modules (**160**) to relay the transmission and backscatter image datasets produced by the transmission and backscatter detector modules (**120**, **140**), wherein the transmission image datasets are relayed to a first processing module (**160a**) and the backscatter image datasets are relayed to a second processing module (**160b**).

The processing modules (**160**) are configured to generate at least five material discrimination images by performing multiple image processing tasks on the backscatter and transmission image datasets produced by the transmission and backscatter detector modules (**120**, **140**). Specifically, the first processing module (**160a**) is configured to generate the at least two material discrimination images of the cargo unit from the transmission image datasets produced by the transmission detector modules (**120**), and the second processing module (**160b**) is configured to generate the at least three material discrimination images of the cargo unit from the backscatter image datasets produced by the backscatter detector modules (**140**).

The image processing tasks performed by each processing module (**160**) may include image combining, image calibration, noise filtration, energy merging, grayscale value generation, material discrimination value generation, and image composition. The processing modules (**160**) are able to generate the at least five material discrimination images in real-time.

Each processing module (**160**) comprises one or more computational threads. The computational threads can either be graphics processing unit or GPU threads, central processing unt or CPU threads or any other suitable computational threads. Each computational thread is allocated to execute at least one of the image processing tasks on the backscatter or transmission image datasets concurrently with other computational threads. For instance, each GPU thread is configured to execute one of the image processing tasks, one CPU thread is configured to perform image combining based on grayscale values generated to produce composite grayscale images of the backscatter or transmission image datasets, and another CPU thread is configured to perform image combining based on material discrimination values generated to produce material discrimination images of the backscatter or transmission image datasets. Each computational thread may also be further allocated to execute at least one of the image processing tasks for one particular backscatter or transmission image dataset.

The processing module (**160**) may either be a server, a computer, a processor, an image processor, or any other suitable computing entity. Moreover, the processing module (**160**) may be a part of a remote station or further connected to a remote station, wherein the remote station is capable of displaying or manipulating the material discriminated image generated so as to allow an operator to further inspect the cargo unit.

Although the system (**100**) is described above as having two processing modules (**160**), the number of processing modules (**160**) may be increased to accommodate the number of transmission and backscatter detector modules (**120**, **140**), wherein one processing module (**160**) for one transmission or backscatter detector module (**120**, **140**). The processing modules (**160**) may also be reduced to a single processing module for performing the multiple image processing tasks on all backscatter and transmission image datasets to generate the at least five material discrimination images.

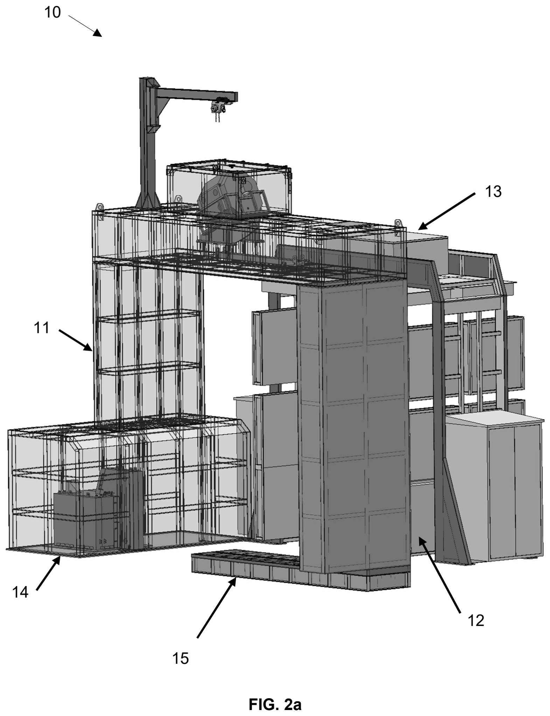

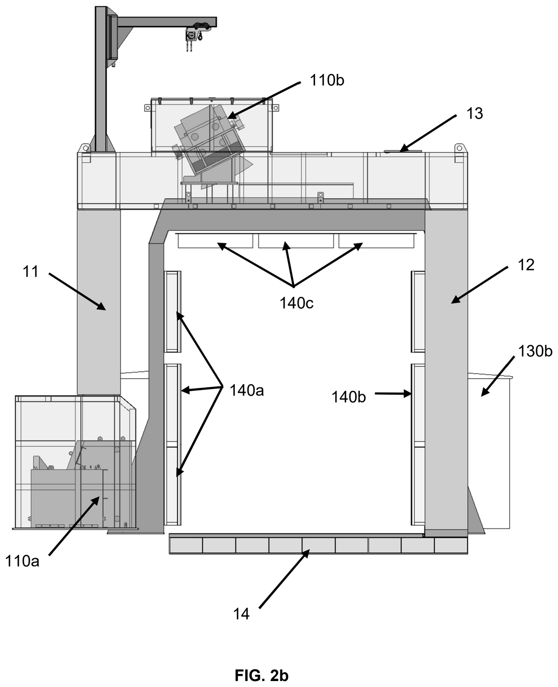

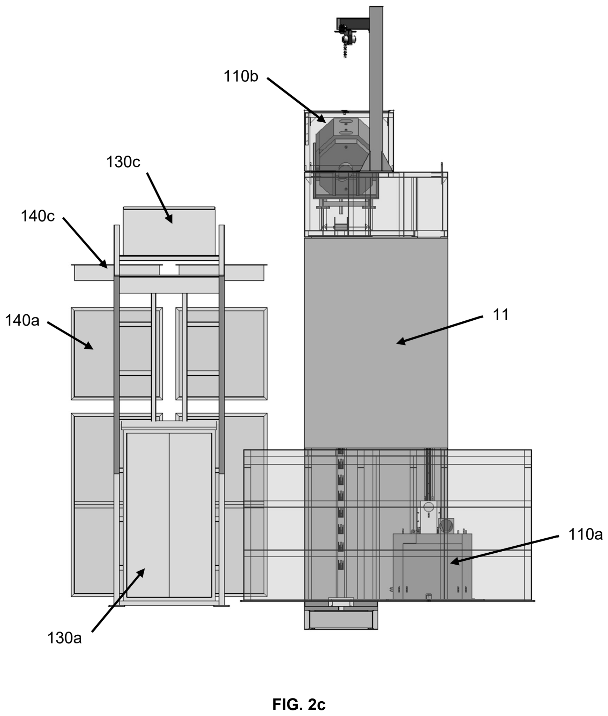

Referring now to **FIGS. 2****(a-c),** there is shown a gantry (**10**) adapted for the system (**100**). The gantry (**10**) is a framework structure that generally includes a first side structure (**11**), a second side structure (**12**) and an overhead structure (**13**)**.** The overhead structure (**13**) spans the width of the gantry (**10**) and is securely anchored to the two side structures (**11**, **12**). A ramp (not shown) is also integrated into the gantry (**10**), wherein the ramp is positioned in between the side structures (**11**, **12**). The ramp provides a pathway for the cargo unit to pass through the gantry (**10**) for scanning. The framework structure can be categorised as a front section and back section, wherein the front section of the gantry (**10**) accommodates the transmission source and detector modules (**110**, **120**) while the back section of the gantry (**10**) accommodates the backscatter source and detector modules (**130**, **140**)**.**

At the front section of the gantry (**10**), the bottom portion of the first side structure (**11**) is a cabin (**14**) for housing the first transmission source module (**110**) while the first transmission detector module (**120a**) is installed at the second side structure (**12**) of the front section of the gantry (**10**). The first transmission detector module (**120a**) is precisely positioned in alignment with the first transmission radiation beam emitted from the first transmission source module (**110a**) housed in the cabin (**14**) of the gantry (**10**). The first transmission detector module (**120a**) is placed in a designated space or compartment of the second side structure of the front section of the gantry (**10**). The designated space or compartment may suitably be equipped with shielding material so as to prevent leakage of X-ray radiation and minimise interference from other X-ray radiation. Thus, the first transmission detector module (**120a**) is able to effectively detect and quantify the first transmission radiation beam that has penetrated through the side of the cargo unit passing through the gantry (**10**). Consequently, the first transmission detector module (**120a**) captures a side transmission imaging view of the cargo unit from its vantage point.

The second side structure has a bottom compartment (**15**) extending horizontally from its bottom portion at the front section. The bottom compartment (**15**) is arranged to be beneath the ramp so as to protect it from being damaged as the cargo unit passes through the gantry (**10**). The bottom compartment (**15**) is used to house the second transmission detector module (**120b**). The second transmission detector module (**120b**) is precisely positioned in alignment with the second transmission radiation beam emitted from the second transmission source module (**110a**) housed at the overhead structure (**13**) of the front section of the gantry (**10**). Thus, the second transmission detector module (**120b**) is able to effectively detect and quantify the second transmission radiation beam that has penetrated through the top of the cargo unit passing through the gantry (**10**). Consequently, the second transmission detector module (**120b**) captures a top transmission imaging view of the cargo unit from its vantage point.

At the back section of the gantry (**10**), the first backscatter source and detector modules (**130a**, **140a**) are installed at the first side structure (**11**). The first backscatter detector module (**140a**) is positioned and aligned to detect and quantify the first scattered radiation beam from one side of the cargo unit. Consequently, the first backscatter detector module (**140a**) captures a side backscatter imaging view of the cargo unit from its vantage point. As the first backscatter source and detector modules (**130a**, **140a**) and the first transmission source module (**110a**) are positioned at different sections of the gantry (**10**), this configuration helps mitigate crosstalk between the two X-ray imaging techniques.

The second backscatter source and detector modules **(130b, 140b)** are installed at the second side structure (**12**) of the back section of the gantry (**10**). The second backscatter detector module (**140b**) is positioned and aligned to detect and quantify the second scattered radiation beam from another side of the cargo unit. Consequently, the second backscatter detector module (**140b**) captures another side backscatter imaging view of the cargo unit from its vantage point. As the second backscatter source and detector modules **(130b, 140b)** and the first transmission detector module **(120a)** are positioned at different sections of the gantry (**10**), this configuration helps mitigate crosstalk between the two X-ray imaging techniques.

The third backscatter source and detector modules **(130c, 140c)** are installed at the overhead structure (**13**) of the back section of the gantry (**10**). The third backscatter detector module (**140c**) is positioned and aligned to detect and quantify the third scattered radiation beam from the top of the cargo unit. Consequently, the third backscatter detector module (**140c**) captures a top backscatter imaging view of the cargo unit from its vantage point. As the third backscatter source and detector modules **(130c, 140c)** and the second transmission source module **(110b)** are positioned at different sections of the gantry (**10**), this configuration helps mitigate crosstalk between the two X-ray imaging techniques.

Referring to **FIG. 5**, there is shown a flowchart of a method for scanning a cargo unit by the system (**100**).

As the cargo unit approaches the gantry (**10**), the controller (**150**) triggers the transmission and backscatter source modules (**110**, **130**) to emit the incident and transmission radiation beams as in step **201**. Each transmission radiation beam emitted from the transmission source modules (**110**) is focused and shaped by their respective collimators to direct the first radiation beam to the first transmission detector module (**120a**) and the second radiation beam to the second transmission detector module (**120b**).

Each incident radiation beam emitted from the backscatter source modules (**130**) is also focused and shaped by their respective collimators to confine and concentrate the radiation beams toward their target area of the cargo unit. Each incident radiation beam emitted from the backscatter source modules (**130**) is confined and concentrated to their target area so that it prevents excessive spreading of backscattering radiation and enhances intensity and clarity for the detection and quantification of the scattered radiation beams from the backscatter source modules (**130**). At the same time, the controller (**150**) also triggers the transmission and backscatter detector modules (**120, 140**) to detect and quantify the radiation beams. In order to allow scanning continuity of both X-ray backscatter and transmission imaging techniques, the transmission and backscatter source and detector modules (**120**, **140**) remain activated until the cargo unit has passed through the gantry (**10**).

As the cargo unit moves through the gantry (**10**), the transmission and backscatter detector modules (**120**, **140**) detect and quantify the radiation beams scattered from the cargo unit and penetrated through the cargo unit as in step **202**. Specifically, the transmission radiation beams emitted from the transmission source modules (**110**) penetrate through the cargo unit section by section, and the transmission detector modules (**120**) detect and quantify the transmission radiation beams that penetrate through each section of the cargo unit. The transmission radiation beams that penetrate through each section of the cargo unit are detected and quantified by the transmission detector modules (**120**) in a form of a transmission line image data, wherein the transmission line image data contains numerical values corresponding to the X-ray attenuation measured along a detection line of each transmission detector module (**120**).

Meanwhile, the incident radiation beams emitted from the backscatter source modules (**130**) scatter from the cargo unit section by section. The backscatter detector modules (**140**) detect and quantify the scattered radiation beams from each section of the cargo unit. The scattered radiation beams from each section of the cargo unit are detected and quantified by the backscatter detector modules (**140**) in a form of a backscatter line image data, wherein the backscatter line image data contains numerical values corresponding to the X-ray intensity measured along a detection line of each backscatter detector module (**140**).

Thereon, as in step **203**, each transmission and backscatter detector module (**120**, **140**) transmits its transmission or backscatter image dataset of the detected radiation beam to the controller (**130**). The transmission and backscatter image datasets are then relayed to the processing modules (**160**) by the controller (**150**), wherein the transmission image datasets are relayed to the first processing module (**160a**) and the backscatter image datasets are relayed to a second processing module (**160b**).

In step **204**, the processing modules (**160**) perform multiple image processing tasks on each backscatter and transmission image dataset to generate at least five material discrimination images of the cargo unit from the respective vantage point of the transmission and backscatter detector modules (**120**, **140**). Specifically, each computational thread of the first processing module (**160a**) executes at least one of the image processing tasks on each transmission image dataset while each computational thread of the second processing module (**160b**) executes at least one of the image processing tasks on each backscatter image dataset, wherein the image processing tasks include image combining, image calibration, noise filtration, energy merging, grayscale value generation, material discrimination value generation, and image composition. Each computational thread is configured to execute the at least one image processing tasks concurrently with other computational threads. Each computational thread may also be configured to execute at least one of the image processing tasks for one particular backscatter or transmission image dataset.

The at least five material discrimination images may include a side transmission imaging view, a top transmission imaging view, a top backscatter imaging view, and both side backscatter imaging views of the cargo unit.

While embodiments of the invention have been illustrated and described, it is not intended that these embodiments illustrate and describe all possible forms of the invention. Rather, the words used in the specifications are words of description rather than limitation and various changes may be made without departing from the scope of the invention.

Further aspects are provided by the subject matter of the following clauses:
Clause 1: A system (**100**) for cargo scanning using X-ray backscatter and transmission imaging techniques comprising:
   a) at least two transmission source modules (**110**), wherein each transmission source module (**110**) is configured to generate and emit a transmission radiation beam,
   b) at least two transmission detector modules (**120**) configured to detect and quantify the transmission radiation beams that penetrate through a cargo unit, wherein each transmission detector module (**120**) is arranged and designated to detect and quantify the transmission radiation beam from a particular transmission source module (**110**),
   c) at least three backscatter source modules (**130**), wherein each backscatter source module (**130**) is configured to generate and emit an incident radiation beam toward a target area of the cargo unit,
   d) at least three backscatter detector modules (**140**) are configured to detect and quantify the incident radiation beams that scatter from their target area of the cargo unit,
   e) a controller (**150**) connected to the at least two transmission source and detector modules (**110**, **120**) and the at least three backscatter source and detector modules (**130**, **140**), wherein the controller is configured to control the transmission and backscatter source modules (**110**, **130**) and the transmission and backscatter detector modules (**120, 140**), and
   f) at least two processing modules (**160**) connected to the controller (**150**);
   characterised in that:
   a) the at least two processing modules (**160**) are configured to generate at least five material discrimination images by performing multiple image processing tasks on each backscatter and transmission image dataset produced by the at least two transmission detector modules (**120**) and the at least three backscatter detector modules (**140**), wherein the multiple image processing tasks include image combining, image calibration, noise filtration, energy merging, grayscale value generation, material discrimination value generation, and image composition.
Clause 2: The system (**100**) of any preceding clause, wherein at least one of the at least two transmission source modules (**110**) is a cyclic particle accelerator.
Clause 3: The system (**100**) of any preceding clause, wherein each processing module (**160**) includes at least one computational thread configured to execute at least one of the multiple image processing tasks on the backscatter or transmission image datasets concurrently.
Clause 4: The system (**100**) of any preceding clause, wherein a first processing module (**160a**) is configured to generate at least two material discrimination images of the cargo unit from the transmission image datasets produced by the transmission detector modules (**120**), and a second processing module (**160b**) is configured to generate at least three material discrimination images of the cargo unit from the backscatter image datasets produced by the backscatter detector modules (**140**).
Clause 5: The system (**100**) of any preceding clause, wherein a first transmission source module (**110a**) is installed at a front section of a first side structure (**11**) of a gantry and a first transmission detector module (**120a**) is installed at a front section of a second side structure (**12**) of the gantry (**10**).
Clause 6: The system (**100**) of any preceding clause, wherein a second transmission source module (**110b**) is installed at a front section of an overhead structure (**13**) of a gantry (**10**) and a second transmission detector module (**120b**) is installed at a bottom compartment (**15**) of the gantry (**10**).
Clause 7: The system (**100**) of any preceding clause, wherein a first backscatter source and detector modules (**130a**, **140a**) are installed at a back section of a first side structure (**11**) of a gantry (**10**).
Clause 8: The system (**100**) of any preceding clause, wherein a second backscatter source and detector modules (**130b**, **140b**) are installed at a back section of a second side structure (**12**) of a gantry (**10**).
Clause 9: The system (**100**) of any preceding clause, wherein a third backscatter source and detector modules (**130c**, **140c**) are installed at a back section of an overhead structure (**13**) of a gantry (**10**).
Clause 10: A method for cargo scanning using X-ray backscatter and transmission imaging techniques is characterised by the steps of:
   a) triggering at least two transmission source modules (**110**) and at least three backscatter source modules (**110**) to emit the incident and transmission radiation beams, and triggering at least two transmission detector modules (**120**) and at least three backscatter detector modules (**140**) to detect and quantify radiation beams;
   b) detecting and quantifying the radiation beams scattered from a cargo unit and penetrated through the cargo unit;
   c) relaying a transmission or backscatter image dataset from each transmission and backscatter detector module (**120**, **140**) to one of at least two processing modules (**160**); and
   d) performing multiple image processing tasks on each backscatter and transmission image dataset to generate at least five material discrimination images of the cargo unit from a respective vantage point of each transmission and backscatter detector module (**120**, **140**), wherein the image processing tasks include image calibration, energy merging, noise filtration, grayscale value generation and material discrimination value generation, wherein at least one of the multiple image processing tasks are executed concurrently by at least one computational thread.
Clause 11: The method of any preceding clause, wherein the at least five material discrimination images include a side transmission imaging view, a top transmission imaging view, a top backscatter imaging view, and both side backscatter imaging views of the cargo unit.

## Claims

1. A system (**100**) for cargo scanning using X-ray backscatter and transmission imaging techniques comprising:
a) at least two transmission source modules (**110**), wherein each transmission source module (**110**) is configured to generate and emit a transmission radiation beam,
b) at least two transmission detector modules (**120**) configured to detect and quantify the transmission radiation beams that penetrate through a cargo unit, wherein each transmission detector module (**120**) is arranged and designated to detect and quantify the transmission radiation beam from a particular transmission source module (**110**),
c) at least three backscatter source modules (**130**), wherein each backscatter source module (**130**) is configured to generate and emit an incident radiation beam toward a target area of the cargo unit,
d) at least three backscatter detector modules (**140**) are configured to detect and quantify the incident radiation beams that scatter from their target area of the cargo unit,
e) a controller (**150**) connected to the at least two transmission source and detector modules (**110**, **120**) and the at least three backscatter source and detector modules (**130**, **140**), wherein the controller is configured to control the transmission and backscatter source modules (**110**, **130**) and the transmission and backscatter detector modules (**120**, **140**), and
f) at least two processing modules (**160**) connected to the controller (**150**);
**characterised in that**:
a) the at least two processing modules (**160**) are configured to generate at least five material discrimination images by performing multiple image processing tasks on each backscatter and transmission image dataset produced by the at least two transmission detector modules (**120**) and the at least three backscatter detector modules (**140**), wherein the multiple image processing tasks include image combining, image calibration, noise filtration, energy merging, grayscale value generation, material discrimination value generation, and image composition.

2. The system (**100**) as claimed in claim **1**, wherein at least one of the at least two transmission source modules (**110**) is a cyclic particle accelerator.

3. The system (**100**) as claimed in any preceding claim, wherein each processing module (**160**) includes at least one computational thread configured to execute at least one of the multiple image processing tasks on the backscatter or transmission image datasets concurrently.

4. The system (**100**) as claimed in any preceding claim, wherein a first processing module (**160a**) is configured to generate at least two material discrimination images of the cargo unit from the transmission image datasets produced by the transmission detector modules (**120**), and a second processing module (**160b**) is configured to generate at least three material discrimination images of the cargo unit from the backscatter image datasets produced by the backscatter detector modules (**140**).

5. The system (**100**) as claimed in any preceding claim, wherein a first transmission source module (**110a**) is installed at a front section of a first side structure (**11**) of a gantry and a first transmission detector module (**120a**) is installed at a front section of a second side structure (**12**) of the gantry (**10**).

6. The system (**100**) as claimed in any preceding claim, wherein a second transmission source module (**110b**) is installed at a front section of an overhead structure (**13**) of a gantry (**10**) and a second transmission detector module (**120b**) is installed at a bottom compartment (**15**) of the gantry (**10**).

7. The system (**100**) as claimed in any preceding claim, wherein a first backscatter source and detector modules (**130a**, **140a**) are installed at a back section of a first side structure (**11**) of a gantry (**10**).

8. The system (**100**) as claimed in any preceding claim, wherein a second backscatter source and detector modules (**130b**, **140b**) are installed at a back section of a second side structure (**12**) of a gantry (**10**).

9. The system (**100**) as claimed in any preceding claim, wherein a third backscatter source and detector modules (**130c**, **140c**) are installed at a back section of an overhead structure (**13**) of a gantry (**10**).

10. A method for cargo scanning using X-ray backscatter and transmission imaging techniques is **characterised by** the steps of:
a) triggering at least two transmission source modules (**110**) and at least three backscatter source modules (**110**) to emit the incident and transmission radiation beams, and triggering at least two transmission detector modules (**120**) and at least three backscatter detector modules (**140**) to detect and quantify radiation beams;
b) detecting and quantifying the radiation beams scattered from a cargo unit and penetrated through the cargo unit;
c) relaying a transmission or backscatter image dataset from each transmission and backscatter detector module (**120**, **140**) to one of at least two processing modules (**160**); and
d) performing multiple image processing tasks on each backscatter and transmission image dataset to generate at least five material discrimination images of the cargo unit from a respective vantage point of each transmission and backscatter detector module (**120**, **140**), wherein the image processing tasks include image calibration, energy merging, noise filtration, grayscale value generation and material discrimination value generation, wherein at least one of the multiple image processing tasks are executed concurrently by at least one computational thread.

11. The method as claimed in claim **10**, wherein the at least five material discrimination images include a side transmission imaging view, a top transmission imaging view, a top backscatter imaging view, and both side backscatter imaging views of the cargo unit.
